# EUROPÄISCHE PATENTSCHRIFT

(11) **EP 2 253 451 B1**
(45) Veröffentlichungstag und Bekanntmachung des Hinweises auf die Patenterteilung: **18.12.2013**
(21) Anmeldenummer: 10162112.6
(22) Anmeldetag: 06.05.2010
(51) Int. Cl.: B29C 49/58, B29C 49/06, B29C 49/10

(54) **Vorrichtung zum Blasformen von Kunststoffvorformlingen mit reduziertem Totvolumen und entsprechende Anlage**
Device for blow moulding plastic preforms with reduced dead volume and corresponding installation
Dispositif de moulage par soufflage de préformes en matière synthétique dotées d'un volume mort réduit et installation correspondante

(30) Priorität: 11.05.2009 DE 102009020738
(43) Veröffentlichungstag der Anmeldung: 24.11.2010
(73) Patentinhaber: Krones AG, 93073 Neutraubling (DE)
(72) Erfinder: Blochmann, Erik, 93073, Neutraubling (DE)
(74) Vertreter: Bittner, Bernhard

(56) Entgegenhaltungen:
- WO-A1-2008/040388
- DE-U1- 20 018 500
- FR-A1- 2 872 082

## Beschreibung

Die vorliegende Erfindung bezieht sich auf eine Vorrichtung zum Blasumformen von Kunststoffvorformlingen zu Kunststoffbehältnissen. Derartige Vorrichtungen sind aus dem Stand der Technik seit langem bekannt. Im Einzelnen ist es dabei bekannt, dass die Kunststoffvorformlinge mit einem gasförmigen Medium und insbesondere Druckluft beaufschlagt werden, um auf diese Weise innerhalb einer Blasform zu Kunststoffbehältnissen expandiert zu werden. Während dieser Blasprozesse werden dabei unterschiedliche Druckniveaus eingesetzt wie beispielsweise ein Vorblasdruck und ein Hauptblasdruck und dergleichen. Um die Kunststoffbehältnisse mit den einzelnen Druckniveaus zu beaufschlagen sind daher mehrere Ventile erforderlich, welche die Druckluftzufuhr an das Behältnis steuern.

Die W02006/096460 A1 beschreibt ein Blasluftsteuersystem. Dabei steuert dieses Blasluftsteuersystem die Einführung eines ersten Gases unter einem ersten Druck in das Innere eines Kunststoffvorformlings und anschließend die Einführung eines zweiten Gases unter einem zweiten Druck, der größer ist als der erste Druck, in das Innere des Kunststoffvorformlings.

Die WO 2007/107016 A1 beschreibt eine Blasstation für Streckblasmaschinen. Dabei ist ein Drehverteiler für komprimierte Luft vorgesehen und eine Vielzahl von Blasformstationen, die radial um eine Drehachse des Verteilers angeordnet sind. Einzelne Ventile sind dabei in jeder Station in einem einzigen Blasblock angeordnet, der seitlich an einem Blaszylinder angeordnet ist.

Aus der WO 2008/040388 A1 ist eine Ventileinrichtung für Hohlkörperblasmaschinen und ein Verfahren zum Blasen bekannt. Dabei ist ebenfalls ein Vorblasventil und ein Hauptblasventil vorgesehen, um ein Blasvolumen mit unterschiedlichen Druckniveaus zu erzeugen. Dieses Vorblasventil und das Hauptblasventil sind dabei parallel zueinander wirkend angeordnet und das Vorblasventil ist als Mehrwegventil ausgeführt, wobei die erste Eingangsleitung eine Drossel und ein gegen die Zuführrichtung wirkendes Rückschlagventil aufweist.

Die US 2008/0213423 A1 beschreibt eine Fluidflußsteueranordnung für eine Behältnisblasmaschine. Dabei sind die einzelnen Ventile alle auf der Vorderseite eines Gehäuses für eine Blasdüse angeordnet.

Aus der DE 199 38 724 A1 ist eine Vorrichtung zur Herstellung von Kunststoffbehältern mittels Streckblasformen bekannt. Dabei wird ein herzustellender Behälter an seinem offenen Ende von einer Aufnahme gehalten und diese Aufnahme ist in ihrem dem Behälter abgewandten Ende fließmitteldicht mit einem Verteilerblock in Eingriff bringbar, wobei aus dem Verteilblock der Streckstempel in axialer Verlängerung dieser Aufnahme beweglich hindurchgeführt ist.

Weitere Vorrichtungen zum Blasformen und Blasluftstenersysteme sind aus FR 2 872 082, DE20018500 und WO 2008040388 bekannt.

Bei der Herstellung bzw. Konstruktion derartiger Anlagen ist man stets bestrebt, den nötigen Energieaufwand zum Betreiben der Anlagen möglichst gering zu halten. Die Ventilblöcke für derartige Vorrichtungen weisen üblicherweise eine Luftanschlußplatte, eine Luftverteilerplatte, einen Steuerblock, Blasventile, einen Blaskolben sowie auch einen Anschluss für einen Schalldämpfer sowie einen Blasschlitten auf. Bedingt durch die im Stand der Technik bekannten Anordnungen entstehen dabei üblicherweise so genannte Totvolumina, insbesondere stromabwärts bzgl. der Ventile, das heißt im Blasraum bzw. in der Zuführung zu dem Blasraum. Diese Totvolumina sind beim Betrieb einer derartigen Vorrichtung schädlich, da diese zunächst mit Druckluft befüllt werden müssten, bevor der eigentliche Umformungsprozess ablaufen kann.

Der vorliegenden Erfindung liegt daher die Aufgabe zugrunde, eine Vorrichtung zum Umformen von Kunststoffbehältnissen energieeffizienter zu gestalten. Insbesondere sollen die erwähnten Totvolumina für die Blasluft verringert werden. Weiterhin liegt der Erfindung die Aufgabe zugrunde, reproduzierbare Blasvorgänge, insbesondere von Blasstation zu Blasstation zu realisieren.

Diese Aufgabe wird erfindungsgemäß durch den Gegenstand von Anspruch 1 erreicht. Vorteilhafte Ausführungsformen und Weiterbildungen sind Gegenstand der Unteransprüche.

Eine erfindungsgemäße Blasvorrichtung zum Expandieren von Kunststoffvorformlingen zu Kunststoffbehältnissen weist eine an einem sich in einer vorgegebenen Längsrichtung erstreckenden Blaskolben angeordnete Blasdüse auf, um diesen zu dessen Expansion mit einem gasförmigen Medium zu beaufschlagen. Weiterhin weist die Vorrichtung eine Anschlusseinrichtung auf, um der Blasvorrichtung mittels wenigstens zwei Anschlussleitungen das gasförmige Medium zuzuführen. Weiterhin ist ein Steuerblock vorgesehen, der in einer Strömungsrichtung des gasförmigen Mediums zwischen der Anschlusseinrichtung und dem Blaskolben angeordnet ist und der die Zuführung des gasförmigen Mediums während des Expansionsvorgangs mit wenigstens teilweise variierenden Druckniveaus steuert. Dabei weist der Steuerblock eine Vielzahl von wenigstens abschnittsweise voneinander getrennten Kanälen zum Führen des gasförmigen Mediums auf, wobei diese Kanäle in einer Umfangsrichtung des Steuerblocks verteilt sind. Bevorzugt ist die Blasdüse an eine Mündung des Kunststoffvorformlings anlegbar. Es wäre jedoch auch denkbar, dass die Blasdüse an eine Blasform anlegbar ist.

Erfindungsgemäß sind an einem Außenumfang des Steuerblocks wenigstens zwei und bevorzugt allgemein eine Vielzahl von unabhängig voneinander steuerbaren Ventilen zum Steuern der Zufuhr des gasförmigen Mediums an die Blasdüse angeordnet und in dieser Umfangsrichtung um diesen Steuerblock verteilt. Weiterhin weist die Vorrichtung eine Verteileinrichtung auf, welche das gasförmige Medium auf die einzelnen Kanäle verteilt bzw. in diese leitet (bzw. lenkt), wobei diese Verteileinrichtung in der Strömungsrichtung des gasförmigen Mediums zwischen der Anschlusseinrichtung und dem Steuerblock angeordnet ist und wobei die einzelnen Kanäle wenigstens abschnittsweise innerhalb des Steuerblocks im Wesentlichen parallel zu der Längsrichtung des Blaskolbens verlaufen. Unter der Umfangsrichtung des Steuerblocks wird insbesondere eine senkrecht zu einer Achse des Blaskolbens verlaufende Richtung verstanden. Bei der Anschlusseinrichtung kann es um jegliche Einrichtung handeln, welche den Anschluss einer Medienzuführung erlaubt.

Eine Abdichtung der Blasdüse gegenüber dem Kunststoffvorformling ist dabei auf unterschiedliche Weisen möglich. So wäre es denkbar, dass die Abdichtung der Blasdüse gegenüber dem Kunststoffvorformling an einem Außenumfang des Gewindes des Kunststoffvorformlings und/oder auch an einem oberen Rand des Gewindes erfolgt. Auch wäre eine Abdichtung gegenüber der Innenwandung des Gewindeabschnitts des Kunststoffvorformlings denkbar. Daneben oder zusätzlich könnte auch eine Abdichtung gegenüber dem Tragring des Kunststoffvorformlings erfolgen. Schließlich wäre es auch denkbar, dass die Abdichtung der Blasdüse nicht oder nicht nur gegenüber dem Kunststoffvorformling erfolgt sondern gegenüber einer Blasform, in welcher der Kunststoffvorformling während des Expansionsvorgangs aufgenommen ist. Eine Abdichtung könnte hier beispielsweise gegenüber einer oberen Fläche dieser Blasform erfolgen.

Bei dem gasförmigen Medium handelt es sich insbesondere um Luft, genauer um Druckluft, mit der die Kunststoffvorformlinge zu den Kunststoffbehältnissen expandiert werden. Der Blaskolben kann sich dabei mit der Blasdüse auf den Kunststoffvorformling zu bewegen und diesen während des Expansionsvorgangs abdichten.

Über die einzelnen Anschlussleitungen kann die Druckluft mit unterschiedlichen Druckniveaus zugeführt werden. Dabei können diese Anschlussleitungen jeweils getrennt voneinander bereits in dem Verteilerblock zu den erwähnten Kanälen bzw. Ventilen geführt werden. Die einzelnen Ventile können während des Expansionsvorgangs in vorgegebener Weise geschaltet werden und auf diese Weise kann ein vom Benutzer gewünschter Blasprozess zum Umformen der Kunststoffvorformlinge in Behältnisse erreicht werden. Bevorzugt können so auch reproduzierbare Blasvorgänge erreicht werden.

Durch die im Rahmen des kennzeichnenden Teils genannten Merkmale in Kombination wird erreicht, dass stromabwärts bzgl. der Ventile ein nur geringes Totvolumen entsteht, so, dass auf diese Weise bei der Herstellung der Kunststoffbehältnisse Druckluft eingespart werden kann. Damit reicht die erfindungsgemäße Vorrichtung eine Anordnung von Bauteilen, um ein geringes Totvolumen im Ventilblock zu erlauben. Dabei kann einerseits durch die Umfangsrichtung angeordneten Ventile ein jeweils sehr kurzer Ventil- bzw. Kanalweg zum Zuführen des Mediums an den Kunststoffvorformling erreicht werden. Durch die weiterhin im Wesentlichen parallel zur Längsrichtung des Blaskolbens verlaufenden Kanäle kann auf Querbohrungen, welche die Druckluft fördern, weitgehend verzichtet werden und auch auf diese Weise das Totvolumen reduziert werden. Genauer gesagt sind die jeweiligen Kanalabschnitte zwischen den Ventilen und dem Blaskolben sehr kurz gehalten.

Die genannten Kanäle können beispielsweise als Bohrungen oder auch als Nuten bzw. Langlöcher ausgestaltet sein. Der Querschnitt dieser Kanäle kann dabei kreisförmig oder auch oval sein. Falls als Kanäle Nuten verwendet werden, können so die Kanäle bei gleich bleibendem Durchfluss noch näher an den Blaskolben herangeführt werden.

Die erfindungsgemäße Vorrichtung erlaubt weiterhin durch die umfängliche Anordnung der Blasventile die Erzeugung eines oder mehrer zusätzlicher Druckniveaus, welche wiederum zur Lufteinsparung im Blasprozess dienen können. Weiterhin wird durch die Anordnung eine strömungsoptimierte Auslegung der Luftführung zur Minimierung der Blaszeiten ermöglicht, dabei ist beispielsweise ein Recycling von Druckluft möglich bzw. auch eine einfache Ausführung einer Luftführung der vorhandenen Austritts- (Exhaust) luft.

Wie oben erwähnt, besteht ein derartiger Ventilblock vorzugsweise zumindest aus einer Luftanschlussplatte, einer Luftverteilerplatte, einem Steuerblock, den Blasventilen und dem Blaskolben. Daneben kann auch ein Blasschlitten, ein Schalldämpfer und ein Anschluss für diesen Schalldämpfer vorgesehen sein. Der Anschluss für die Luftversorgung für den Blasprozess sowie auch gegebenenfalls eine Pilotluftversorgung erfolgt über die erwähnte Luftanschlussplatte an die Luftverteilerplatte bzw. die Verteileinrichtung. Es wäre jedoch auch möglich, auf die Luftanschlussplatte zu verzichten und die entsprechenden Anschlüsse direkt anzuordnen.

Diese Verteileinrichtung ist dabei bevorzugt benachbart zu dem Steuerblock angeordnet und leitet die verschiedenen Druckanschlüsse zum Blasraum bzw. Blaskolben. Falls der Vorformling mit seiner Öffnung nach oben expandiert wird, ist daher die Luftverteilereinrichtung vorzugsweise über dem Steuerblock angeordnet. Durch diese Anordnung können Querbohrungen im Steuerblock vermieden werden und die Blasventile können dadurch nahe am Blasraum angebracht werden. Dies wiederum verhindert bzw. vermindert Totvolumen im Blasraum bzw. Totvolumen in der Zuführung zum Blasraum. Die Verminderung des Totvolumens wird weiterhin auch die Schaltgenauigkeit der erfindungsgemäßen Vorrichtung erhöhen.

Bei einer weiteren vorteilhaften Ausführungsform verlaufen die Kanäle innerhalb des Steuerblocks bis zu den Ventilen ausschließlich im Wesentlichen parallel zu der genannten Längsrichtung. Damit wird hier innerhalb des Steuerblocks vollständig auf Querbohrungen verzichtet, wodurch wiederum Totvolumen verringert werden kann. Unter im Wesentlichen parallel werden Richtungen verstanden, die um nicht mehr als 10°, bevorzugt um nicht mehr als 5° von der geometrischen Längsrichtung abweichen.

Bei einer weiteren vorteilhaften Ausführungsform ist an dem Außenumfang des Steuerblocks wenigstens eine Austrittsöffnung für das gasförmige Medium angeordnet. An dieser Austrittsöffnung kann ein Schalldämpfer, der die bei dem Austritt der Luft entstehenden Geräusche mindert, angeordnet sein. Der Schalldämpfer ist damit hier direkt am Steuerblock über einen Anschluss angebunden, so dass Totzeiten für die Entlastung verringert werden.

Bei einer weiteren vorteilhaften Ausführungsform ist zwischen den Blaskolben und dem Steuerblock ein Blasraum vorgesehen, in den bevorzugt die einzelnen Kanäle bzw. einen Bestandteil dieser Kanäle bildende Verbindungsleitungen münden. Genauer ist hier der Blasraum über dem eigentlichen Blaskolben angeordnet, so dass ein zusätzlicher Ringraum um den Kolben, wie im Stand der Technik vorhanden, entfällt. Auf diese Weise kann der Totraum verringert werden.

Bei einer weiteren vorteilhaften Ausführungsform schließt sich der Blasraum unmittelbar an die Ventile an. Dies bedeutet, dass die Ventile in unmittelbarer Nähe zu dem besagten Blasraum angeordnet sind. Auf diese Weise kann die Luftführungsstrecke zwischen den Ventilen und dem Blasraum weiter verringert werden und so auch der Totraum weiter verringert werden.

Vorteilhaft steht wenigstens eine Ventileinrichtung über zwei wenigstens abschnittsweise voneinander getrennte Verbindungskanäle in Strömungsverbindung mit dem Blaskolben. So kann die Luftzuführung eines Ventils als ein Kanal ausgeführt sein und die Weiterführung stromabwärts bezüglich des Ventils kann zwei derartige Kanäle umfassen. Der erfindungsgemäß zu verringernde Totraum bewirkt gegebenenfalls eine ungünstigere Luftverteilung in dem Blaskolben. Die beiden erwähnten Verbindungskanäle bzw. Leitungen können wiederum eine verbesserte Zirkulation bzw. Luftverteilung in dem Blaskolben bewirken.

Vorteilhaft sind dabei die beiden Verbindungskanäle symmetrisch bezüglich einer geometrischen Verbindungslinie zwischen dem Steuerblock und den betreffendem Ventil angeordnet. Vorteilhaft ist entlang dieser geometrischen Verbindungslinie eine Zuführleitung für die Luft an das Ventil vorgesehen. Diese symmetrische Anordnung führt zu einer gleichmäßigen Verteilung der jeweiligen Luft an den Blaskolben. Es wird darauf hingewiesen, dass diese symmetrische Anordnung auch unabhängig von den obigen Merkmalen zum Einsatz kommen kann und insbesondere von den im kennzeichnenden Teil des unabhängigen Anspruchs 1 genannten Merkmalen.

Eine entsprechende weitere erfindungsgemäße Blasvorrichtung zum Expandieren von Kunststoffvorformlingen zu Kunststoffbehältnissen weist eine an einem sich in einer vorgegebenen Längsrichtung erstreckenden Blaskolben angeordnete Blasdüse auf, um diesen zu dessen Expansion mit einem gasförmigen Medium zu beaufschlagen. Weiterhin weist die Vorrichtung eine Anschlusseinrichtung auf, um der Blasvorrichtung mittels wenigstens zwei Anschlussleitungen das gasförmige Medium zuzuführen. Weiterhin ist ein Steuerblock vorgesehen, der in einer Strömungsrichtung des gasförmigen Mediums zwischen der Anschlusseinrichtung und dem Blaskolben angeordnet ist und der die Zuführung des gasförmigen Mediums während des Expansionsvorgangs mit wenigstens teilweise variierenden Druckniveaus steuert. Erfindungsgemäß weist der Steuerblock eine Vielzahl von wenigstens abschnittsweise voneinander getrennten Kanälen zum Führen des gasförmigen Mediums auf, wobei diese Kanäle vorzugsweise in einer Umfangsrichtung des Steuerblocks verteilt sind. Weiterhin sind die Kanäle oder Verbindungsleitungen, welche Bestandteile dieser Kanäle sind, symmetrisch bezüglich einer geometrischen Verbindungslinie zwischen dem Steuerblock und dem betreffenden Ventil angeordnet.

Bei einer weiteren vorteilhaften Ausführungsform weist die Vorrichtung einen Anschluss zum Zuführen eines gasförmigen Mediums zum Steuern wenigstens eines Ventils auf. Genauer gesagt wird bei dieser Ausführungsform wenigstens ein Ventil und bevorzugt mehrere Ventile mit Steuerluft geschaltet. Es wäre jedoch auch eine elektrische Ansteuerung der einzelnen Ventile denkbar.

Bei einer weiteren vorteilhaften Ausführungsform weist die Vorrichtung einen gegenüber dem Blaskolben in der Längsrichtung bewegbaren Stangenkörper zum Dehnen der Kunststoffvorformlinge auf. Bei diesen stangenförmigen Körpern handelt es sich um die auch im Stand der Technik bekannte Reckstange, die zum Recken der Kunststoffvorformlinge eingesetzt wird. Bei dieser Ausführungsform handelt es sich bei der gesamten Vorrichtung um einen Bestandteil einer so genannten Streckblasmaschine.

Bei einer weiteren vorteilhaften Ausführungsform weist die Vorrichtung eine in Strömungsrichtung des gasförmigen Mediums zwischen der Anschlusseinrichtung und wenigstens einem Ventil angeordnete Drosseleinrichtung auf. Vorzugsweise ist diese Drosseleinrichtung hinsichtlich ihrer Drosselwirkung verstellbar.

Vorzugsweise weist die Vorrichtung auch parallel zu der Drosseleinrichtung ein Rückschlagventil auf.

Genauer gesagt ist bei dieser Ausführungsform in der so genannten P1 Luftführung eine einstellbare Drossel vorgesehen sowie ein Rückschlagventil. Die Drossel und das Rückschlagventil sind dabei, wie erwähnt, vor dem eigentlichen Blasventil angeordnet. Der Vorteil dieser Anordnung besteht darin, dass durch Drosselung des Rückschlagventils bzw. auch deren Zuführleitungen kein zusätzliches Totvolumen in der Anordnung anfällt.

Es wird jedoch darauf hingewiesen, dass die Drossel und insbesondere auch deren Anordnung zwischen der Anschlusseinrichtung und wenigstens einem Ventil unabhängig von der oben beanspruchten Erfindung Anwendung finden, bzw. auch bei aus dem Stand der Technik bekannten Streckblasmaschinen.

Die P1 Luftführung dient bevorzugt zum Vorblasen der Kunststoffvorformlinge. Der Blasprozess für die Erstellung der so genannten Vorblase wird unter anderem durch die Drossel eingestellt. Für ein Recycling in dem besagten P1 Luftstrang wird das Rückschlagventil zusätzlich geöffnet. Die Zeit für das Recycling in dieses Druckniveau wird auf diese Weise verringert.

Die vorliegende Erfindung ist weiterhin auf eine Anlage zum Expandieren von Kunststoffvorformlingen zu Kunststoffbehältnissen gerichtet, welche eine Vielzahl von Vorrichtungen der oben beschriebenen Art aufweist, wobei diese Vorrichtungen an einem gemeinsamen Träger angeordnet sind. Vorzugsweise werden dabei die einzelnen Vorrichtungen entlang einer kreisförmigen Bahn bewegt. Dabei findet besonders bevorzugt eine kontinuierliche Bewegung der einzelnen Vorrichtungen insbesondere entlang einer kreisförmigen Bahn statt.

Vorteilhaft sind der Steuerblock und die Verteileinrichtung als voneinander getrennte oder voneinander trennbare Bauteile ausgeführt.

Weitere Vorteile und Ausführungsformen ergeben sich aus den beigefügten Zeichnungen:
Darin zeigen:
   - Fig. 1: Eine perspektivische Darstellung einer erfindungsgemäßen Vorrichtung;
   - Fig. 2: Eine weitere Ansicht der in Fig. 1 gezeigten Vorrichtung;
   - Fig. 3: Eine Seitenansicht der Vorrichtung aus Fig. 1;
   - Fig. 4: Eine Ansicht der Vorrichtung aus Fig. 3 entlang der Ebene A-A aus Fig. 3;
   - Fig. 5: Eine weitere Schnittdarstellung der erfindungsgemäßen Vorrichtung zur Veranschaulichung der Strömungsverläufe;
   - Fig. 6: Eine Detailansicht einer erfindungsgemäßen Vorrichtung;
   - Fig. 7: Eine Ansicht einer erfindungsgemäßen Vorrichtung in einer weiteren Ausführungsform;
   - Fig. 8: Eine weitere Ansicht zur Veranschaulichung der in Fig. 7 gezeigten Aus- führungsform;
   - Fig. 9: Eine Detaildarstellung einer erfindungsgemäßen Vorrichtung einer weiteren Ausführungsform;
   - Fig. 10: Einen Schaltplan zur Veranschaulichung einer weiteren vorteilhaften Aus- führungsform;
   - Fig. 11: Eine Detaildarstellung zur Veranschaulichung einer vorteilhaften Ausführungs- form;
   - Fig. 12: Eine Detaildarstellung für eine Luftdruckführung für die Vorrichtung aus Fig. 11;
   - Fig. 13: Eine weitere perspektivische Darstellung einer erfindungsgemäßen Vor- richtung;
   - Fig. 14: Eine Darstellung eines Diagramms zur Veranschaulichung eines Blas- prozesses ;
   - Fig. 15: Ein weiteres Diagramm zur Veranschaulichung eines Blasprozesses;
   - Fig. 16: Eine schematische Darstellung zur Veranschaulichung eines Ventils;
   - Fig. 17: die Darstellung aus Figur 16 bei geschlossenem Ventil;
   - Fig. 18: Eine weitere vorteilhafte Ausführungsform mit Hygieneschutzkammer;
   - Fig. 19: Eine weitere vorteilhafte Ausführungsform mit einer Gleithülse für das Ventil;
   - Fig. 20: Eine Ausführungsform, bei der die Verteileinrichtung und der Steuerblock be- züglich einander beweglich sind;
   - Fig. 21: Eine Ausführungsform mit konzentrischer Stirnflächengestaltung des Ventil- kolbens; und
   - Fig. 22: Eine Ausführungsform mit beweglichem Steuerventil.

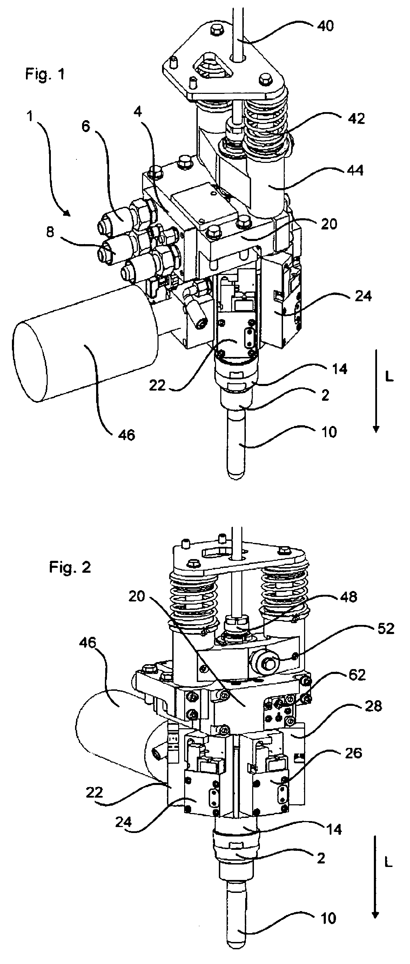

Fig. 1 zeigt eine perspektivische Darstellung einer erfindungsgemäßen Vorrichtung 1. Das Bezugszeichen 10 kennzeichnet einen zu expandieren Kunststoffvorformling, an dessen Mündung eine Blasdüse 2 angelegt wird. Diese Blasdüse ist an einem Blaskolben 14 angeordnet, der sich in der Längsrichtung L erstreckt. Auch der Vorformling 10 erstreckt sich in dieser Längsrichtung L.

Die Bezugszeichen 6 und 8 beziehen sich auf Anschlussleitungen, um der Vorrichtung 1 Blasluft zuzuführen. Diese Anschlussleitungen 6 und 8 sind dabei an einer Anschlusseinrichtung bzw. Anschlussplatte 4 angeordnet. An diese Anschlussplatte 4 wiederum schließt sich eine Verteileinrichtung 20 an, um die Druckluft in unterschiedliche (nicht gezeigte) Strömungskanäle aufzuteilen. Das Bezugszeichen 40 kennzeichnet eine Reckstange zum Recken der Behältnisse, das Bezugszeichen 42 eine Federungseinrichtung und das Bezugszeichen 44 einen Blasschlitten.

Die Vorrichtung 1 weist mehrere Ventile 22, 24 auf, die in Umfangsrichtung um einen (verdeckten) Steuerblock angeordnet sind. Das Bezugszeichen 46 kennzeichnet einen Schalldämpfer, der einen Teil der bei dem Blasprozess entstehenden Abluft aufnimmt.

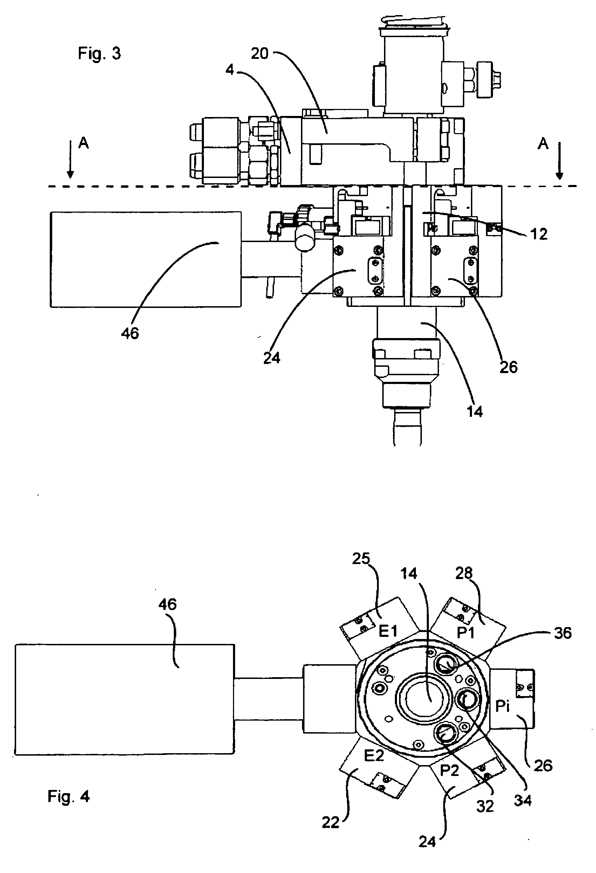

Fig. 2 zeigt eine weitere Darstellung einer erfindungsgemäßen Vorrichtung. Man erkennt hier wieder vier Ventile 22, 24, 26 und 28, die in Umfangsrichtung um einen Steuerblock herum angeordnet sind. Durch die in Fig. 2 gezeigte Anordnung der Ventile ist es prinzipiell auch möglich, zusätzliche Blasventile vorzusehen. Bei einer bekannten Ausführungsform weist diese drei Blasventile auf für zwei Druckniveaus P1 und P2 und einen Auslass (Exhaust). Es könnten jedoch auch vier derartige Ventile vorgesehen sein, wobei ein zusätzliches Ventil zum Recyceln der Luft vorgesehen ist. Daneben könnten jedoch auch mehr als vier Ventile, wie in Fig. 4 gezeigt, vorgesehen sein. Genauer gesagt ist es möglich, fünf oder mehr Ventile und den Exhaust bzw. den Schalldämpfer 46 nahe am Blasraum anzubringen, wodurch das Totvolumen reduziert wird und auch die Entlastungszeit durch die nahe Anordnung verringert wird. Genauer gesagt, wird das Totvolumen insbesondere nicht durch die Ventile selbst, sondern durch deren geometrische Anordnung reduziert.

Grundsätzlich sind Ausführungen mit mehr als fünf Blasventilen denkbar, dadurch würde die Geometrie des (nicht gezeigten) Steuerblocks dann nicht mehr sechseckig sondern beispielsweise siebeneckig, achteckig usw. ausgeführt sein.

Allgemein kann der Steuerblock eine polygonale Außenform aufweisen. Dabei sind bevorzugt die einzelnen Seitenflächen dieses polygonalen Körpers eben ausgeführt, wodurch das Anbauen des jeweiligen Blasventils bzw. dessen Trägers erleichtert wird.

Die einzelnen Blasventile werden im Weiteren auch mit P1, Pi, P2, E1 und E2 bezeichnet. Dabei bezeichnet P1 den Vorblasdruck, P2 den Fertigblasdruck. Pi bezeichnet ein Druckniveau zwischen P1 und P2, E1 bezeichnet das erste Entlastungsventil und E2 das zweite Entlastungsventil. Das E2 Ventil kann über den Anschluss 78 und die Leitung 78b in den Schalldämpfer 46 die Entlastung auch in einen Recyclingkreis führen.

Bei einem möglichen Verfahren wäre es zunächst möglich, dass ein Startprozess begonnen wird mit einem Druckniveau P1, anschließend Pi, anschließend P2 dann P1, dann Pi und zum Schluss zuerst E2 und dann E1. Durch das Öffnen des Ventils P1 wird zunächst ein Vorblasen eingeleitet. Anschließend wird das entsprechende Ventil P1 geschlossen. Im Weiteren wird das Ventil Pi geöffnet, was bewirkt, dass der Vorformling bzw. die Flasche mit dem Zwischendruckniveau Pi gefüllt wird. Anschließend wird Pi geschlossen. Im Weiteren wird P2 geöffnet, wodurch die Flasche fertig geblasen wird und anschließend P2 wieder geschlossen. Schließlich wird wiederum das Ventil P1 geöffnet um das P1 Volumen zu recyceln. Anschließend wird das P1 Volumen geschlossen und das Pi geöffnet, um das Pi Volumen zu recyceln. Im Anschluss wird Pi wieder geschlossen. In letzten Schritten wird E2 geöffnet, wodurch Restluft mit Rückführung aus der Maschine recycelt werden kann. Anschließend wird E1 geschlossen und anschließend wird zusätzlich E1 geöffnet, damit Restluft entweichen kann. Zuletzt werden die Ventile E1 und E2 wieder geschlossen. Es wird darauf hingewiesen, dass die Symbole P1, P2, E1, E2 und Pi einerseits die Ventile, andererseits aber auch die durch diese Ventile bewirkten Druckniveaus bezeichnen können

Daneben wäre es auch möglich, im Blasprozess mit Spülluft durch die Reckstange zu arbeiten. Untenstehend wird eine Auswahl an Blasprozessen und Schaltfolgen erläutert.

Das Bezugszeichen 62 bezieht sich auf eine Drossel, die in Strömungsrichtung der Luft vor dem P1 Ventil angeordnet ist. Das Bezugszeichen 52 kennzeichnet eine Laufrolle für einen Blasschlitten, der über eine stationär angeordnete Kurve bewegt werden kann.

Das Bezugszeichen 48 kennzeichnet eine obere Führung für die Reckstange einschl. einer Reckstangenabdichtung.

Fig. 3 zeigt eine Seitenansicht einer erfindungsgemäßen Vorrichtung. Man erkennt hier, dass die Verteileinrichtung 20 oberhalb des Steuerblocks 12 angeordnet ist bzw. sich der Steuerblock direkt an diese Verteileinrichtung 20 anschließt. Der Anschluss erfolgt, wie oben erwähnt, über die Luftanschlussplatte 4. In dieser Anschlusseinrichtung 4 werden die notwendigen Druckniveaus zur Verfügung gestellt. An bzw. in dem Steuerblock 12 werden die einzelnen Luftkanäle, wie unten im Detail gezeigt wird parallel zu dem Blaskolben 14 geführt. Auf diese Weise kann, wie oben erwähnt, Totraum verringert werden.

Weiterhin ist erkennbar, dass die einzelnen Ventile 24 und 26 auch in Umfangsrichtung um den Blaskolben 14 angeordnet sind, so dass die Luftzuführung zu dem oberhalb des Blaskolbens angeordneten Blasraum kurz sind, wodurch das Totvolumen im Blasraum verringert wird. Auch der Schalldämpfer 46 ist direkt an dem Steuerblock 12 über einen Anschluss angebunden. Auch auf diese Weise werden die Totzeiten für die Entlastung verringert.

Fig. 4 zeigt eine Draufsicht auf die Vorrichtung entlang der Linie A-A aus Fig. 3. Man erkennt hier, welchem der einzelnen Ventile 22 bis 28 jeweils die unterschiedlichen Druckniveaus P1, Pi, P2 so wie die Auslassniveaus E1 und E2 zugeordnet sind.

In dem Schnitt sind weiterhin drei Kanäle 32, 34 und 36 erkennbar, die sich hier in der Längsrichtung L, das heißt senkrecht zu der Figurenebene erstrecken. Diese Kanäle sind jeweils getrennt voneinander und führen zu den einzelnen Ventilen 24, 26 und 28. Man erkennt, dass auf diese Weise die einzelnen Kanäle 32, 34 und 36 jeweils genau parallel zu der Längsrichtung verlaufen, bzw. auf Querbohrungen verzichtet werden kann, wodurch wiederum Totraum verhindert wird.

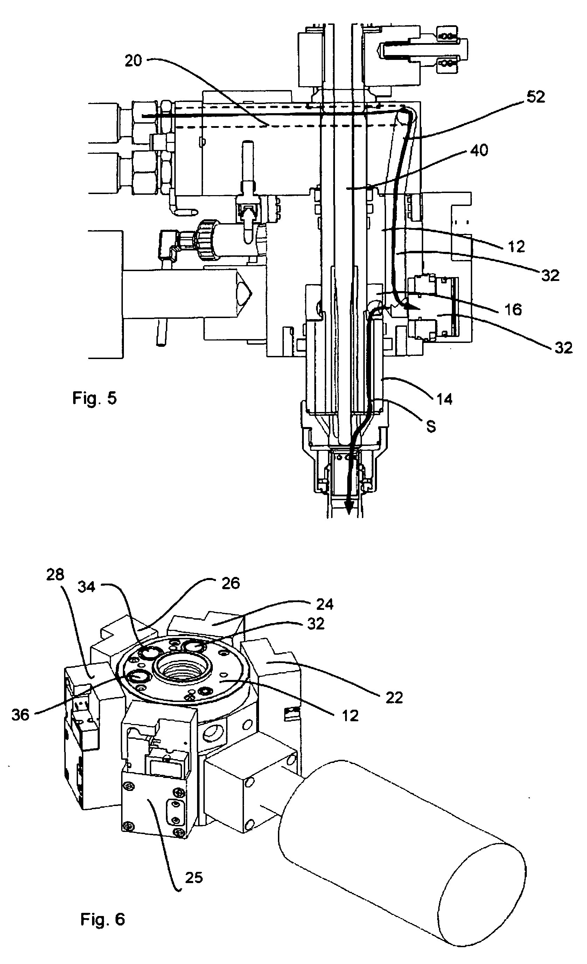

Fig. 5 zeigt eine Veranschaulichung einer erfindungsgemäßen Vorrichtung. Dabei ist erkennbar, dass die einzelnen Ventile jeweils ihre Ventilkörper in einem unteren Bereich des Steuerblocks 12 aufweisen bzw. deren Ausgänge direkt in den Blasraum 16 münden. Auch auf diese Weise kann das Totvolumen stromabwärts bezüglich der Ventile vermindert werden. In dem Blaskolben 14 werden die einzelnen Ströme wieder zusammengeführt. Das Bezugszeichen S bezieht sich in seiner Gesamtheit auf einen Strömungspfad, bzw. eine Luftzuführung für die Blasventile. Auch in Fig. 5 ist erkennbar, dass der Blasraum 16 direkt über den Blaskolben 14 angeordnet ist.

Fig. 6 zeigt eine weitere Darstellung einer erfindungsgemäßen Vorrichtung. Man erkennt auch hier wieder, dass die einzelnen Ventile in Umfangsrichtung um den Steuerblock 12 angeordnet sind und auch die einzelnen Kanäle 32, 34 und 36 in Umfangsrichtung voneinander beabstandet sind.

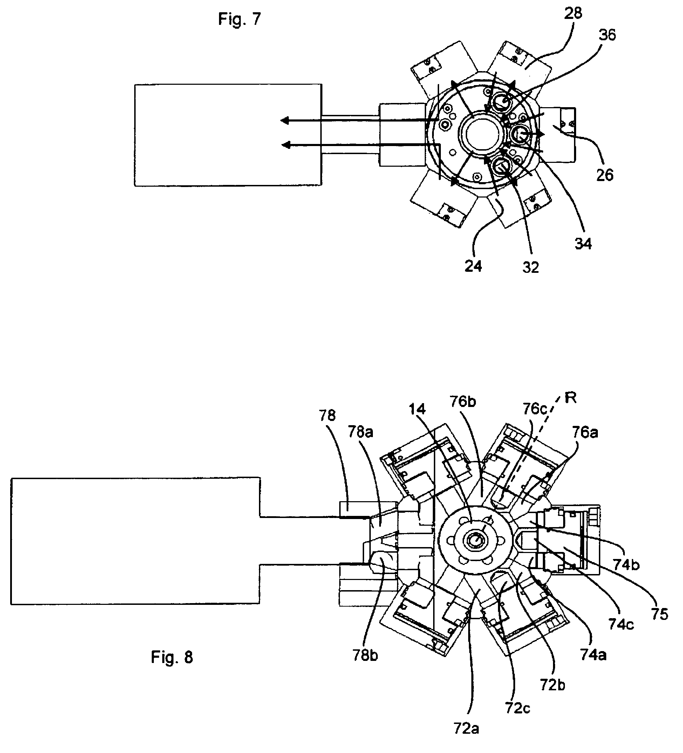

Fig. 7 zeigt eine weitere Ausführungsform einer erfindungsgemäßen Vorrichtung. Auch hier sind die einzelnen Ventile 24 - 28 in Umfangsrichtung um den Steuerblock 12 angeordnet. Wie jedoch durch die einzelnen Pfeile veranschaulicht, kann hier die Luft von jedem einzelnen Ventil auf jeweils zwei voneinander getrennte Pfaden in Richtung des (nicht gezeigten) Zublaskolbens gelangen.

Fig. 8 veranschaulicht diesen Sachverhalt genauer. Man erkennt, dass jedes einzelne Ventil jeweils zwei Luftabführungsleitungen 72a, 72b, 74a, 74b, 76a, 76b aufweist, welche als Luftabführung weg von den einzelnen Blasventilen dienen. Daneben ist jeweils eine Luftzuführung an das jeweilige Ventil vorgesehen, wobei jedem Ventil jeweils nur eine derartige Leitung 72c, 74c, 76c zugeordnet ist. Die jeweils beiden Luftabführungsleitungen 72a, 72b ... 76a, 76b erstrecken sich dabei nicht genau in radialer Richtung, sondern sind symmetrisch bezüglich einer radialen Richtung welche, wie in Fig. 8 gezeigt, beispielsweise durch die Luftzuführung 76c verläuft. Diese radiale Richtung ist mit dem Bezugszeichen R gekennzeichnet. Bevorzugt weisen die Leitungen 72a und 72b den gleichen Durchmesser auf. Auch die Leitungen 74a und 74b weisen den gleichen Durchmesser auf. Allerdings können sich die Durchmesser der Leitungen 72a, 72b einerseits und der Leitungen 74a, 74b andererseits auch voneinander unterscheiden. Bevorzugt stellen die Verbindungskanäle 72a...76b Teile der Kanäle 32, 34 dar.

Das Bezugszeichen 75 bezieht sich jeweils auf einen Ventilkolben der einzelnen Ventile. Der Blaskolben 14 ist ebenfalls erkennbar, hier jedoch unterhalb der Ventile. Die einzelnen Ventilkolben können dabei beispielsweise einen zylindrischen Querschnitt mit konstantem Querschnitt aufweisen. Es wäre jedoch auch denkbar, dass die jeweiligen Stirnflächen der Ventilkolben unterschiedlich groß sind. So wäre es möglich, dass diejenige Stirnfläche des Ventilkolbens, welche zum Bewegen dieses Kolbens mit Druck beaufschlagt wird, größer ist als die gegenüberliegende Stirnfläche.

Bei einer bevorzugten Ausführungsform ragt wenigstens eine Stirnfläche wenigstens eines Ventilkolbens und bevorzugt die Stirnflächen mehrerer Ventilkolben in einem geschlossenen Zustand des jeweiligen Ventils derart an den Blaskolben bzw. die Blasdüse heran, dass ein radialer Abstand zwischen dieser Stirnfläche und der Blasdüse geringer ist als 4cm, bevorzugt geringer als 3cm, bevorzugt geringer als 2cm und bevorzugt geringer als 1 cm und besonders bevorzugt geringer als 0,5cm.

Bei einer weiteren vorteilhaften Ausführungsform ist der Ventilkörper in einem Ventilsitz angeordnet und dieser Ventilsitz kontaktiert den Blaskolben bzw. die Blasdüse.

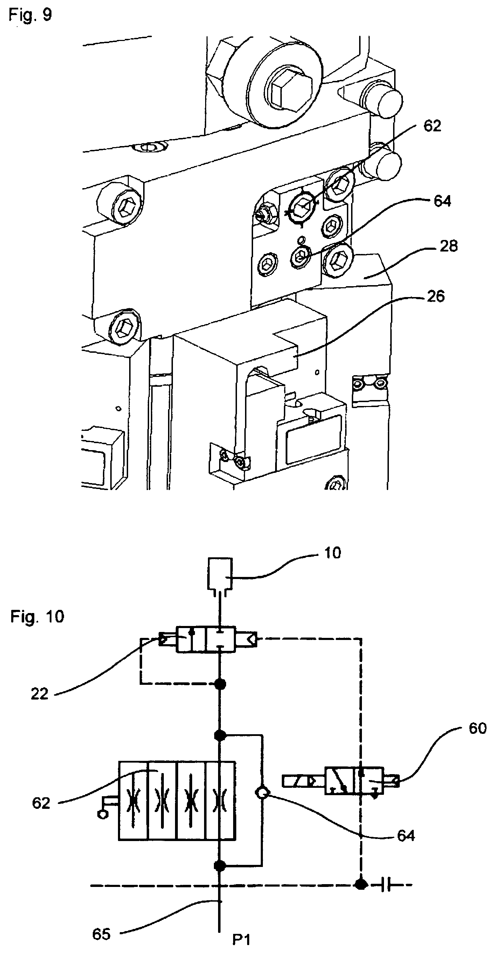

Fig. 9 zeigt eine weitere Ausführungsform einer erfindungsgemäßen Vorrichtung. In diesem Falle ist stromaufwärts bzgl. des Ventils 28, das heißt des P1 Druckniveaus eine Anordnung mit einer Drossel 62 und einem Rückschlagventil 64 vorgesehen. Dabei sind sowohl die Drossel 62 als auch das Rückschlagventil 64 vor dem eigentlichen Blasventil 28 angeordnet.

Fig. 10 veranschaulicht ein Schaltbild dieser Anordnung. Eine Entlastung kann, wie oben erwähnt, über das Rückschlagventil 64 erfolgen. Das Bezugszeichen 60 kennzeichnet ein Steuerventil zum Ansteuern des eigentlichen Ventils 28. Das Bezugszeichen 10 kennzeichnet das zu expandierende Behältnis.

Die Drossel 62 ist hier vierstufig ausgeführt und handbetätigt. Über eine ebenfalls in Fig. 10 gezeigte Leitung 64 wird das P1 Druckniveau zugeführt.

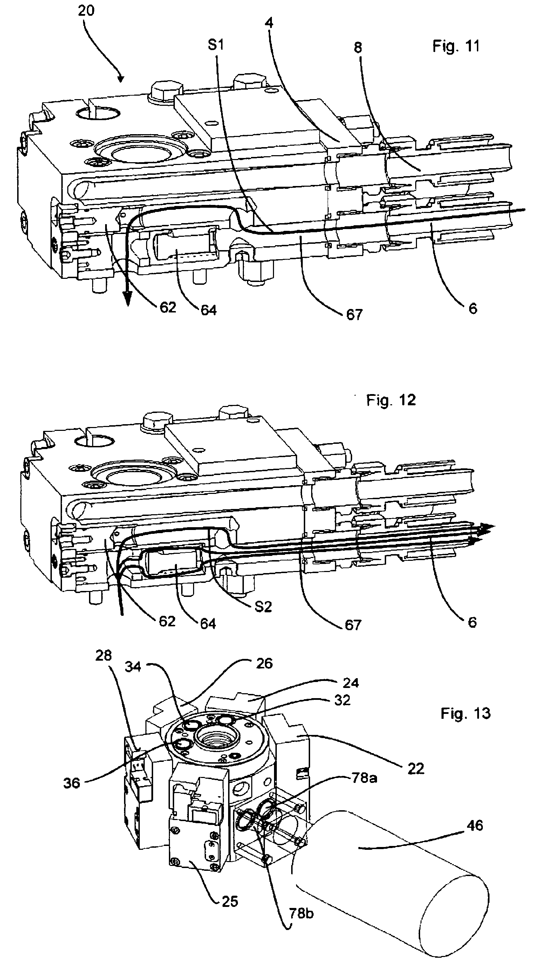

Fig. 11 zeigt eine Schnittdarstellung einer erfindungsgemäßen Vorrichtung für die Erzeugung des Druckniveaus P1 bzw. den Verfahrensschritt, in dem eine Vorblase erstellt wird. Die Luft zum Füllen der Vorblase wird durch die Drossel 62 über das P1 Ventil zum Vorformling geführt. In dieser Situation ist das Rückschlagventil 64 geschlossen.

Fig. 12 zeigt den entsprechenden Prozess für das P1 Recycling in das P1 Druckniveau. Dabei wird die Luft aus der Flasche über die Drossel 62 und einen Kanal 67 bzw. auch das Rückschlagventil 64 zurück in den P1 Strang geführt. Durch den Einsatz des Rückschlagventils 64 wird diese Prozesszeit minimiert.

Fig. 13 zeigt eine perspektivische Darstellung einer erfindungsgemäßen Vorrichtung. Hier sind insbesondere auch die beiden Verbindungsleitungen 78a und 78b dargestellt, welche in den Schalldämpfer 46 münden. Es wäre jedoch auch möglich, dass die Leitungen in einen Recyclingkanal münden.

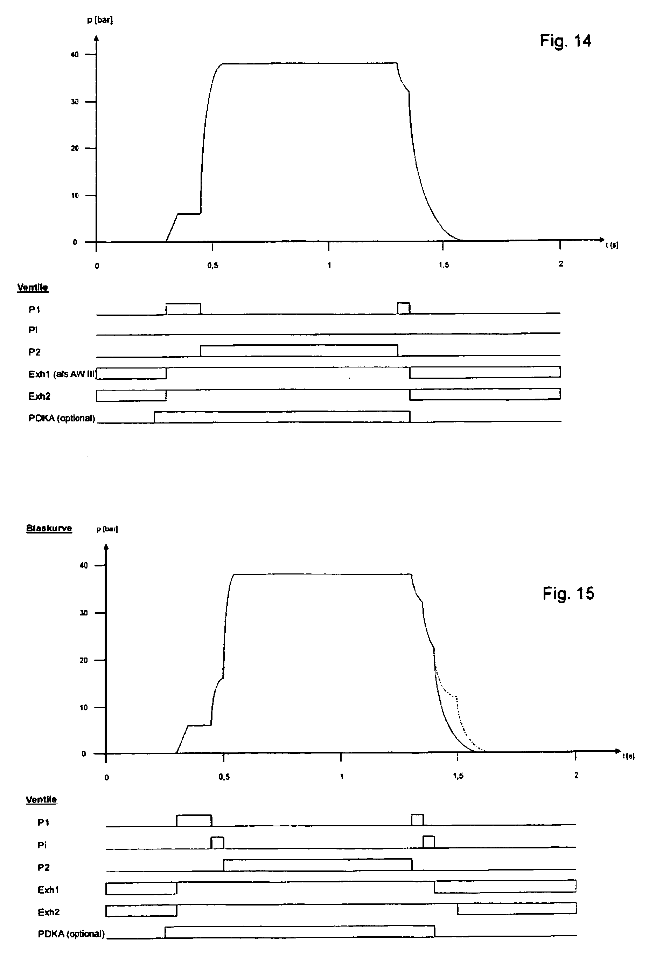

Die Fig. 14 und 15 zeigen zwei mögliche Prozesse zum Expandieren eines Kunststoffvorformlings. Während bei dem in Fig. 4 gezeigten Prozess lediglich die Druckniveaus P1 und P2 sowie die Auslassniveaus E1 und E2 zum Einsatz kommen, wird bei dem etwas komplizierter gestalteten in Fig. 15 gezeigten Prozess auch das Druckniveau Pi mit einem weiteren Schaltventil verwendet.

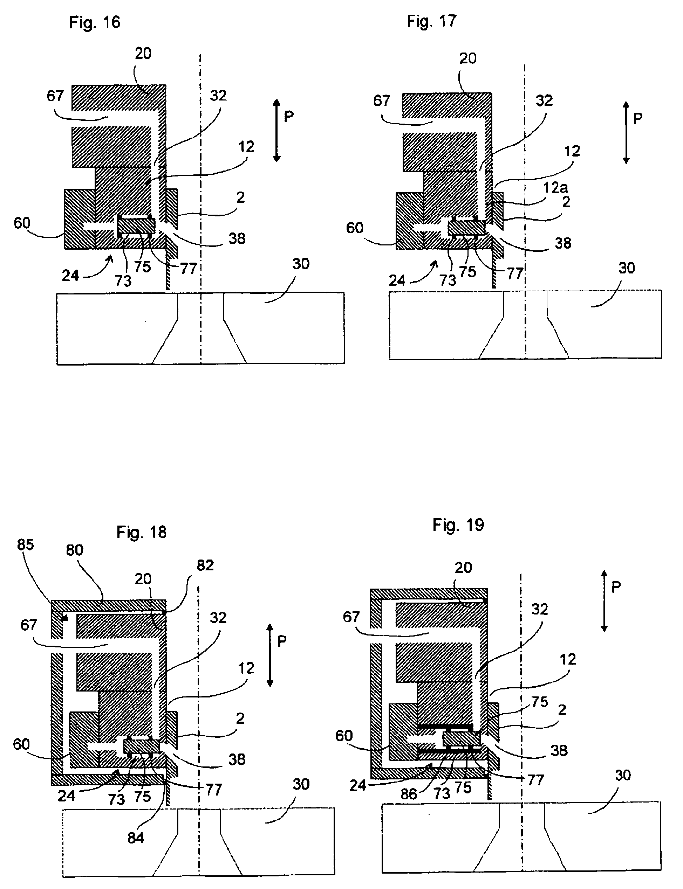

Die Fig. 16 bis 22 zeigen weitere Ausgestaltungen von Ventilanordnungen.

In den Fig. 16 bis 22 bezieht sich das Bezugszeichen 30 jeweils auf eine Blasform, in der ein (nicht gezeigter) Kunststoffvorformling während des Expansionsvorgangs angeordnet ist. Die Blasdüse 2 dichtet, wie oben erwähnt, während des Expansionsvorgangs gegenüber diesem Kunststoffvorformling ab. Die Verteileinrichtung 20 und der Steuerblock 12 (auch als Ventilblock bezeichnet) sind dabei zwar getrennte Bauteile, jedoch fest aneinander angeordnet. Das Bezugszeichen 60 kennzeichnet wiederum das Steuerventil, welches am Außenumfang des Steuerblocks angeordnet ist. Über den Kanal 67 und weiter den Kanal 32 wird, wie oben erwähnt, die Luft zugeführt. Bevorzugt ist die Verteileinrichtung als insbesondere separates Bauteil zwischen der Anschlusseinrichtung und dem Steuerblock angeordnet. Es wäre jedoch allgemein auch möglich, dass die Anschlusseinrichtung unmittelbar an dem Steuerblock angeordnet ist und so auch die Funktion der Verteileinrichtung übernimmt.

Je nach Stellung des Ventilkolbens 75 wird die Luftzufuhr in einen Kanal 38, der in der Blasdüse angeordnet ist und der die Luft der Blasdüse zuführt, freigegeben oder unterbrochen. Dabei erstreckt sich hier der Kanal 32 in dem Steuerblock in einer radialen Richtung des Ventilkolbens 75 so dass die Druckluft seitlich auf den Ventilkolben trifft. Auf diese Weise kann der Totraum weiter reduziert werden.

Das Bezugszeichen 77 bezieht sich auf Dichtungseinrichtungen, mit denen der Ventilkolben 75 gegenüber einem Ventilraum 73 abgedichtet ist. Das Bezugszeichen 24 kennzeichnet wiederum das Ventil in seiner Gesamtheit.

Fig. 17 zeigt eine Darstellung, bei der im Gegensatz zu der in Fig. 16 gezeigten Darstellung das Ventil 24 geschlossen ist. Man erkennt auch hier, dass sich der Kanalabschnitt 38 innerhalb der Blasdüse schräg nach unten erstreckt. Bei der in den Fig. 16 und 17 gezeigten Ausführungsform werden der Steuerblock 12 sowie die Verteileinrichtung 20 gemeinsam mit der Blasdüse nach oben und unten bewegt (Pfeil P). Es wäre jedoch auch möglich, dass die Verteileinrichtung 20 und der Steuerblock stationär angeordnet sind und sich die Blasdüse 2 gegenüber dem Steuerblock 12 bewegt. Im letzteren Fall wird der Kanal 38 durch Hochfahren auch von dem Steuerblock 12 verschlossen.

Der Ventilkolben dichtet gegenüber einer Wandung 12a des Steuerblocks 12 ab.

Fig. 18 zeigt eine weitere Ausführungsform, bei der neben der in den Fig. 16 und 17 gezeigten Anordnungen zusätzlich noch eine umgebende Wandung 80 vorgesehen ist, welche mittels Dichteinrichtungen 82, 84 gegenüber der Verteileinrichtung 20 bzw. der Blasdüse 2 angeordnet ist. Diese Wandung 80 bildet hier eine Hygieneschutzkammer 85, wodurch die gesamte Vorrichtung leicht zu reinigen ist. Weiterhin ist vorteilhaft diese Wandung schnell abnehmbar, um im Bedarfsfall die einzelnen Ventile austauschen zu können.

Fig. 19 zeigt eine weitere Ausführungsform einer erfindungsgemäßen Vorrichtung. Hier ist der Ventilkörper 75 in einer Gleithülse 86 angeordnet, sodass das Ventil schnell austauschbar ist und auf diese Weise ein Austausch sowohl der Hülse 86 als auch des Ventilkolbens 75 schnell möglich ist.

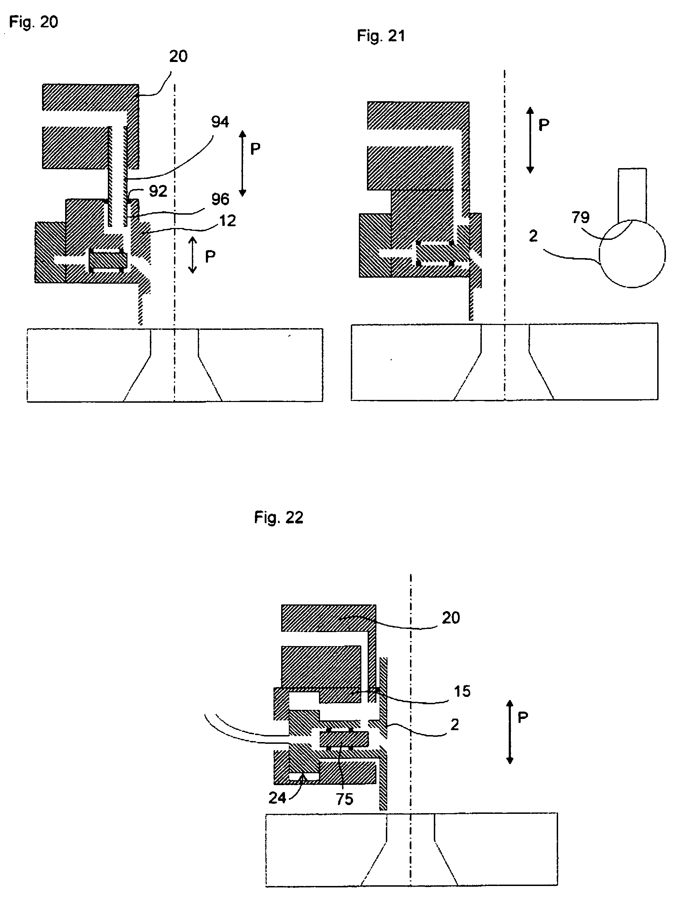

Fig. 20 zeigt eine weitere Ausführungsform der erfindungsgemäßen Vorrichtung. Bei dieser Ausführungsform sind die Blasdüse 2 und der Steuerblock 12 einteilig ausgebildet oder fest miteinander verbunden. Die Bewegung dieser beiden Elemente entlang des Doppelpfeils P kann beispielsweise servoangetrieben oder auch von einem Linearmotor angetrieben oder auch kurvengesteuert erfolgen. Die Verteileinrichtung 20 ist bei dieser Ausführungsform feststehend ausgebildet, bewegt sich also in der Richtung P nicht. Das Bezugszeichen 92 bezieht sich auf Dichtungseinrichtungen, mit denen ein Kanal bzw. ein Rohrstück 94 beweglich gegenüber einer entsprechenden Ausnehmung 96, welche in dem Steuerblock angeordnet ist, abgedichtet ist. Umgekehrt wäre es auch möglich, die Ausnehmung 96 in der Verteileinrichtung anzuordnen und umgekehrt das Rohrstück 94 fest an dem Steuerblock 12 vorzusehen.

Fig. 21 zeigt eine weitere Ausführungsform der erfindungsgemäßen Vorrichtung. Bei dieser Ausführungsform weist der Ventilkolben 75 eine Oberfläche bzw. Stirnfläche 79 (vgl. rechtes Teilbild) auf, deren Krümmung konzentrisch zu der Blasdüse 2 ausgebildet ist. Auf diese Weise kann der Ventilkolben bzw. dessen Stirnfläche noch näher an die Blasdüse herangeführt werden, um auf diese Weise das Totvolumen weiter zu verringern. Bei dieser Ausführungsform kann die Blasdüse gegenüber dem Steuerblock 12 beweglich sein.

Fig. 22 zeigt eine weitere Ausführungsform der erfindungsgemäßen Vorrichtung. Bei dieser Ausführungsform ist die Blasdüse 2 mit dem Ventil 24 verbunden. Der Ventilkörper 75 bzw. das Ventil 24 ist, wie gezeigt, hier axial in dem Steuer- bzw. Ventilblock 12 geführt. Damit sind bei dieser Ausführungsform das Steuerventil 60, das Blasventil 24 und die Blasdüse 2 verbunden. Dem gegenüber kann die Verteileinrichtung 20 in der Richtung P unbeweglich angeordnet sein, wobei hier der Steuerblock 12 ein Gehäuse 15 aufweist, innerhalb dessen das gesamte Ventil 24 in der Richtung P beweglich ist.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Vorrichtung
- 2: Blasdüse
- 4: Anschlussplatte, Anschlusseinrichtung
- 6,8: Anschlussleitungen
- 10: Kunstoffvorformling
- 12: Steuerblock
- 12a: Wandung
- 14: Blaskolben
- 15: Gehäuse
- 16: Blasraum
- 20: Verteileinrichtung
- 22, 24, 25, 26, 28: Ventile
- 30: Blasform
- 32, 34, 36: Kanäle
- 40: Reckstange
- 42: Federungseinrichtung
- 44: Blasschlitten
- 46: Schalldämpfer, Exhaust
- 48: Obere Führung für die Reckstange incl. Reckstangenabdichtung
- 52: Laufrolle für einen Blasschlitten
- 60: Steuerventil
- 62: Drossel
- 64: Rückschlagventil, Drossel
- 67: Kanal
- 73: Ventilraum
- 75: Ventilkolben
- 72a, 72b, 74a, 74b, 76a, 76b: Luftabführungsleitungen, Verbindungskanäle
- 72c, 74c, 76 c: Luftzuführungsleitung
- 77: Dichtungseinrichtungen
- 78: Schalldämpfer sowie Recycling
- 78a, 78b: Verbindungsleitung
- 79: Stirnfläche
- 80: Wandung
- 82: Dichteinrichtung
- 84: Dichteinrichtung
- 85: Hygieneschutzkammer
- 86: Gleithülse
- 92: Dichtungseinrichtung
- 94: Rohrstück
- 96: Ausnehmung

- P: Richtung
- E1: Erstes Entlastungsventil / Niveau
- E2: Zweites Entlastungsventil / Niveau
- L: Längsrichtung
- P1, P2: Druckniveau
- Pi: Druckniveau zwischen P1 und P2
- R: Radiale Richtung

## Patentansprüche

1. Blasvorrichtung (1) zum Expandieren von Kunstatoffvorformlingen (10) zu Kunststoffbehältnissen mit einer an einem sich in einer vorgegebenen Längsrichtung (L) erstreckenden Blaskolben (14) angeordneten Blasdüse (2), um diesen zu dessen Expansion mit einem gasförmigen Medium zu beaufschlagen, mit einer Anschlusseinrichtung (4), um der Blasvorrichtung (1) mittels wenigstens zwei Anschlussleitungen (6, 8) das gasförmige Medium zuzuführen, mit einem Steuerblock (12), der in einer Strömungsrichtung des gasförmigen Mediums zwischen der Anschlusseinrichtung (4) und dem Blaskolben (14) angeordnet ist und der die Zuführung des gasförmigen Mediums während des Expansionsvorgangs mit wenigstens teilweise variierenden Druckniveaus (P1, P2) steuert wobei der Steuerblock (12) eine Vielzahl von wenigstens abschnittsweise voneinander getrennten Kanälen (32, 34, 36) zum Führen des gasförmigen Mediums aufweist wobei diese Kanäle (32, 34, 36) In einer Umfangsrichtung des Steuerblocks (12) verteilt sind,
wobei
an einem Außenumfang des Steuerblocks (12) wenigstens zwei voneinander steuerbare Ventilen (22, 24, 26) zum Steuern der Zufuhr des gasförmigen Mediums an die Blasdüse (2) angeordnet und in einer Umfangsrichtung um diesen Steuerblock (12) verteilt sind,
die Blasvorrichtung (1) eine Verteileinrichtung (20) aufweist, welche das gasförmige Medium in die einzelnen Kanäle (32, 34, 36) leitet, wobei diese Verteileinrichtung (20) in der Strömungsrichtung des gasförmigen Mediums zwischen der Anschtusseinrichtung (4) und dem Steuerblock (12) angeordnet ist und wobei die einzelnen Kanäle (32, 34, 36) wenigstens abschnittsweise innerhalb des Steuerblocks (12) im Wesentlichen parallel zu der Längsrichtung (L) des Blaskolbens (14) verlaufen, **dadurch gekennzeichnet, dass** die Vorrichtung (1) eine in Strömungsrichtung des gasförmigen Mediums zwischen der Anschlusseinrichtung und wenigstens einem Ventil (22, 24, 26) angeordnete Drosseleinrichtung (62) aufweist und
mindestens das Ventil zur Regelung der Einleitung des Druckes P1 ein schließbares 2/2 Wege -Ventil ist.

2. Vorrichtung nach Anspruch 1,
**dadurch gekennzeichnet, dass**
die Kanäle (32, 34, 36) Innerhalb des Steuerblocks bis zu den Ventilen (22, 24, 26) ausschließlich parallel zu der Längsrichtung (L) verlaufen.

3. Vorrichtung nach wenigstens einem der vorangegangenen Ansprüche,
**dadurch gekennzeichnet, dass**
an dem Außenumfang des Steuerblocks (12) wenigstens eine Austrittsöffnung für das gasförmige Medium angeordnet ist.

4. Vorrichtung nach wenigstens einem der vorangegangenen Ansprüche,
**dadurch gekennzeichnet, dass**
zwischen dem Blaskolben (14) und dem Steuerblock (12) ein Blasraum (16) vorgesehen ist, in den die einzelnen Kanäle (32, 34, 36) münden.

5. Vorrichtung nach Anspruch 4,
**dadurch gekennzeichnet, dass**
sich der Blasraum (16) unmittelbar an die Ventile (22, 24, 26) anschließt.

6. Vorrichtung nach wenigstens einem der vorangegangenen Ansprüche,
**dadurch gekennzeichnet, dass**
wenigstens eine Ventileinrichtung (22, 24, 26) über zwei wenigstens abschnittsweise voneinander getrennte Verbindungskanäle (72a, 72b, 74a, 74b, 76a, 76b) in Strömungsverbindung mit dem Blaskolben (14) steht.

7. Vorrichtung nach Anspruch 6,
**dadurch gekennzeichnet, dass**
die Verbindungskanäle (72a, 72b, 74a, 74b, 76a, 76b) symmetrisch bezüglich einer geometrischen Verbindungslinie zwischen dem Steuerblock (12) und dem betreffenden Ventil angeordnet sind.

8. Vorrichtung nach wenigstens einem der vorangegangenen Ansprüche,
**dadurch gekennzeichnet, dass**
die Vorrichtung (1) einen Anschluss zum Zuführen eines gasförmigen Mediums zum Steuern wenigstens eines Ventils (22, 24, 26) aufweist.

9. Vorrichtung nach wenigstens einem der vorangegangenen Ansprüche.
**dadurch gekennzeichnet, dass**
die Vorrichtung (1) einen gegenüber dem Blaskolben (14) in der Längsrichtung (L) bewegbaren Stangenkörper (40) zum Dehnen der Kunststoffvorformlinge (10) aufweist.

10. Vorrichtung (1) nach einem der vorangegangenen Ansprüche,
**dadurch gekennzeichnet, dass**
parallel zu der Drosseleinrichtung (62) ein Rückschlagventil (64) vorgesehen ist.

11. Anlage zum Expandieren von Kunststoffvorformlingen zu Kunststoffbehältnissen, mit einer Vielzahl von Vorrichtungen (1) nach wenigstens einem der vorangegangenen Ansprüche, wobei diese Vorrichtungen (1) an einem gemeinsamen Träger angeordnet sind.

## Claims

1. A blow moulding apparatus (1) for expanding plastic preforms (10) into plastic containers, comprising a blow nozzle (2) disposed on a blow piston (14) extending in a predetermined longitudinal direction (L), in order to apply a gaseous medium thereto for the expansion thereof, a connection device (4) in order to supply the gaseous medium to the blow moulding apparatus (1) by means of at least two connection lines (6, 8), a control block (12) which is arranged between the connection device (4) and the blow piston (14) if viewed in a flow direction of the gaseous medium and which controls the supply of the gaseous medium during the expansion process using at least partially varying pressure levels (P1, P2), wherein the control block (12) has a plurality of channels (32, 34, 36) which are separated from each other at least in sections, for guiding the gaseous medium, which channels (32, 34, 36) are distributed in a circumferential direction of the control block (12),
wherein at least two valves (22, 24, 26) which may be controlled independently from each other are provided on an outer circumference of the control block (12) and are distributed in a circumferential direction around this control block (12), for controlling the supply of the gaseous medium to the blow nozzle (2), and the blow moulding apparatus (1) includes a distribution means (20) which guides the gaseous medium into the individual channels (32, 34, 36), which distribution means (20) is arranged between the connection device (4) and the control block (12) if viewed in the flow direction of the gaseous medium, and wherein the individual channels (32, 34, 36) extend within the control block (12) at least in sections essentially parallel to the longitudinal direction (L) of the blow piston (14), **characterized in that** the apparatus (1) comprises a throttle device (62) which is arranged between the connection device (4) and at least a valve (22, 24, 26) if viewed in the flow direction of the gaseous medium and at least the valve for the regulation of the application of the pressure P1 is a 2/2 way valve which is able to be closed.

2. The apparatus as claimed in Claim 1, **characterised in that** the channels (32, 34, 36) extend within the control block up to the valves (22, 24, 26) exclusively parallel to the longitudinal direction (L).

3. The apparatus as claimed in at least one of the preceding claims, **characterised in that** at least one exhaust outlet for the gaseous medium is provided on the outer perimeter of the control block (12).

4. The apparatus as claimed in at least one of the preceding claims, **characterised in that** a blow chamber (16), into which the individual channels (32, 34, 36) open, is provided between the blow piston (14) and the control block (12).

5. The apparatus as claimed in Claim 4, **characterised in that** the blow chamber (16) is joined directly on to the valves (22, 24, 26).

6. The apparatus as claimed in at least one of the preceding claims, **characterised in that** at least one valve unit (22, 24, 26) is in flow communication with the blow piston (14) via two connection channels (72a, 72b, 74a, 74b, 76a, 76b) separated from each other at least in sections.

7. The apparatus as claimed in Claim 6, **characterised in that** the connection channels (72a, 72b, 74a, 74b, 76a, 76b) are arranged symmetrically with regard to a geometrical connection line between the control block (12) and the corresponding valve.

8. The apparatus as claimed in at least one of the preceding claims, **characterised in that** the apparatus (1) includes a connection for supplying a gaseous medium for controlling at least one valve (22, 24, 26).

9. The apparatus as claimed in at least one of the preceding claims, **characterised in that** the apparatus (1) has a rod body (40) movable with respect to the blow piston (14) in the longitudinal direction (L) for streching the plastic preforms (10).

10. The apparatus (1) as claimed in one of the preceding claims, **characterised in that** a check valve (64) is provided parallel to the throttle device (62).

11. A system for expanding plastic preforms into plastic containers, having a plurality of apparatus (1) as claimed in at least one of the preceding claims, wherein these apparatus (1) are arranged on a common carrier.

## Revendications

1. Système de soufflage (1) pour l'expansion de préformes en matière plastique (10) afin de former des récipients en matière plastique, avec une buse de soufflage (2) disposée sur un piston de soufflage (14) s'étendant dans une direction longitudinale (L) définie, pour alimenter celui-ci avec un fluide gazeux permettant son expansion, avec un dispositif de raccordement (4) pour amener le fluide gazeux au système de soufflage (1) par l'intermédiaire d'au moins deux conduites de raccordement (6, 8), avec un bloc de commande (12) disposé entre le dispositif de raccordement (4) et le piston de soufflage (14) dans la direction d'écoulement du fluide gazeux et commandant l'amenée du fluide gazeux pendant le processus d'expansion avec des niveaux de pression (P1, P2) au moins partiellement variables, le bloc de commande (12) comportant une pluralité de canaux (32, 34, 36) au moins partiellement séparés les uns des autres pour l'amenée du fluide gazeux, lesdits canaux (32, 34, 36) étant répartis dans une direction périphérique du bloc de commande (12),
dans lequel au moins deux vannes (22, 24, 26) commandables séparément l'une de l'autre sont disposées sur une périphérie extérieure du bloc de commande (12) pour la commande d'amenée du fluide gazeux vers la buse de soufflage (2), et réparties dans une direction périphérique autour dudit bloc de commande (12),
le système de soufflage (1) comportant un dispositif distributeur (20) qui dirige le fluide gazeux vers les différents canaux (32, 34, 36), ledit dispositif distributeur (20) étant disposé entre le dispositif de raccordement (4) et le bloc de commande (12) dans la direction d'écoulement du fluide gazeux, et les différents canaux (32, 34, 36) s'étendant au moins partiellement à l'intérieur du bloc de commande (12) sensiblement parallèlement à la direction longitudinale (L) du piston de soufflage (14), **caractérisé en ce que**
ledit système (1) comporte un dispositif d'étranglement (62) disposé entre le dispositif de raccordement (4) et au moins une vanne (22, 24, 26) dans la direction d'écoulement du fluide gazeux, et
**en ce qu'**au moins la vanne de régulation d'application de la pression P1 est un distributeur 2/2.

2. Système selon la revendication 1, **caractérisé en ce que**
les canaux (32, 34, 36) s'étendent à l'intérieur du bloc de commande exclusivement parallèlement à la direction longitudinale (L) jusqu'aux vannes (22, 24, 26).

3. Système selon au moins une des revendications précédentes, **caractérisé en ce qu'**
au moins une ouverture de sortie pour le fluide gazeux est disposée sur la périphérie extérieure du bloc de commande (12).

4. Système selon au moins une des revendications précédentes, **caractérisé en ce qu'**
un espace de soufflage (16) est prévu entre le piston de soufflage (14) et le bloc de commande (12), où aboutissent les différents canaux (32, 34, 36).

5. Système selon la revendication 4, **caractérisé en ce que** l'espace de soufflage (16) est directement contigu aux vannes (22, 24, 26).

6. Système selon au moins une des revendications précédentes, **caractérisé en ce qu'**
au moins un dispositif à vanne (22, 24, 26) est en liaison d'écoulement avec le piston de soufflage (14) par l'intermédiaire de deux canaux de raccordement (72a, 72b, 74a, 74b, 76a, 76b) au moins partiellement séparés l'un de l'autre.

7. Système selon la revendication 6, **caractérisé en ce que**
les canaux de raccordement (72a, 72b, 74a, 74b, 76a, 76b) sont disposés symétriquement par rapport à une ligne de connexion géométrique entre le bloc de commande (12) et la vanne concernée.

8. Système selon au moins une des revendications précédentes, **caractérisé en ce que**
ledit système (1) comporte un raccord d'amenée d'un fluide gazeux pour la commande d'au moins une vanne (22, 24, 26).

9. Système selon au moins une des revendications précédentes, **caractérisé en ce que**
ledit système (1) comporte un corps de barre (40) déplaçable dans la direction longitudinale (L) par rapport au piston de soufflage (14), pour l'étirage des préformes en matière plastique (10).

10. Système (1) selon l'une des revendications précédentes, **caractérisé en ce qu'**
une vanne anti-retour (64) est prévue parallèlement au dispositif d'étranglement (62).

11. Installation pour l'expansion de préformes en matière plastique afin de former des récipients en matière plastique, comportant une pluralité de systèmes (1) selon au moins une des revendications précédentes, lesdits systèmes (1) étant disposés sur un support commun.
